# EUROPÄISCHE PATENTSCHRIFT

(11) **EP 2 532 459 B1**
(45) Veröffentlichungstag und Bekanntmachung des Hinweises auf die Patenterteilung: **13.05.2015**
(21) Anmeldenummer: 12170696.4
(22) Anmeldetag: 04.06.2012
(51) Int. Cl.: B23Q 39/02

(54) **Verfahren zum Betreiben einer Werkzeugmaschine**
Method of operating a machine tool
Procédé de fonctionnement d'une machine-outil

(30) Priorität: 08.06.2011 DE 102011077230
(43) Veröffentlichungstag der Anmeldung: 12.12.2012
(73) Patentinhaber: Index-Werke GmbH & Co. KG Hahn & Tessky, 73730 Esslingen (DE)
(72) Erfinder: Baumann, Ulrich, 73252 Lenningen (DE); Forst, Heinz, 73773 Aichwald (DE)
(74) Vertreter: Hoeger, Stellrecht & Partner Patentanwälte

(56) Entgegenhaltungen:
- WO-A1-2010/031733
- DE-A1- 19 919 238

## Beschreibung

Die Erfindung betrifft ein Verfahren zum Betreiben einer Werkzeugmaschine gemäß dem Oberbegriff des Patentanspruchs 1.

Derartige Werkzeugmaschinen sind aus dem Stand der Technik bekannt siehe z.B. die Dokumente WO 2010/031733 und DE 199 19 238 A1.

Bei diesen ist der Antrieb für die antreibbaren Werkzeughalter und antreibbaren Werkzeuge so gelöst, dass entweder alle in dem Revolverkopf sitzenden Werkzeuge durch einen sogenannten Summenantrieb antreibbar sind oder nur eines der Werkzeuge, nämlich das in der Bearbeitungsstellung stehende Werkzeug, durch einen sogenannten Einzelantrieb antreibbar ist.

Diese bekannten Lösungen haben den Nachteil, dass beim Wechseln eines Werkzeugs durch Drehen des Revolverkopfes, das heißt, einem Bewegen des in der Bearbeitungsstellung stehenden Werkzeugs aus der Bearbeitungsstellung heraus und Einwechseln eines neuen Werkzeugs in die Bearbeitungsstellung jeweils nichtproduktive Zeiträume auftreten, die entweder beim Einzelantrieb dadurch bedingt sind, dass das die Bearbeitungsstellung verlassende Werkzeug bis zum Stillstand abgebremst und von der Werkzeugantriebseinheit entkoppelt werden muss und das in die Bearbeitungsstellung hineinbewegte Werkzeug mit der Werkzeugantriebseinheit gekoppelt und auf seine Bearbeitungsdrehzahl beschleunigt werden muss, oder die beim Summenantrieb dadurch entstehen, dass die Drehzahl aller Werkzeuge so angepasst werden muss, dass das neu in die Bearbeitungsstellung einzuwechselnde Werkzeug die für die Bearbeitung erforderliche und sich in der Regel von der Drehzahl vorherigen Werkzeugs unterscheidende Drehzahl aufweist.

Dadurch wird bei den beiden bekannten Lösungen die Stückzeit für die Bearbeitung des Werkstücks bezogen auf die reine produktive Bearbeitungszeit für das Werkstück erhöht.

Der Erfindung liegt daher die Aufgabe zugrunde, ein Verfahren zum Betreiben einer Werkzeugmaschine der gattungsgemäßen Art derart zu verbessern, dass beim Wechseln von angetriebenen Werkzeugen bei der Bearbeitung des Werkstücks möglichst kleine nichtproduktive Zeiträume entstehen.

Diese Aufgabe wird erfindungsgemäß durch ein Verfahren zum Betrieben einer Werkzeugmaschine, welche die im Patentanspruch 1 angeführten Merkmale aufweist, gelöst.

Der Vorteil der erfindungemäßen Lösung ist somit darin zu sehen, dass mit dieser die Möglichkeit besteht, jeden antreibbaren Werkzeughalter entweder durch die erste Verzahnung oder die zweite Verzahnung anzutreiben und somit die Möglichkeit besteht, mindestens zwei Werkzeughalter im Revolverkopf unabhängig voneinander anzutreiben.

Somit besteht die Möglichkeit, bei einer Bearbeitung des Werkstücks mit dem Werkzeug von einem der Werkzeughalter, das nächstfolgend eingesetzte Werkzeug in einem anderen der Werkzeughalter bereits auf die für die Bearbeitungsoperation notwendige Drehzahl zu bringen, unabhängig davon, in welcher Art und Weise das Werkzeug des einen Werkzeughalters angetrieben wird, und dann lediglich durch Drehen des Revolverkopfes das am Werkstück bearbeitende Werkzeug von dem einen Werkzeug auf das andere nächstfolgend eingesetzte Werkzeug schnell zu wechseln.

Zur Kopplung der antreibbaren Werkzeughalter mit der ersten oder zweiten Verzahnung ist vorzugsweise vorgesehen, dass jeder antreibbare Werkzeughalter mittels eines mit der ersten oder zweiten Verzahnung in Eingriff bringbaren Antriebszahnrades antreibbar ist.

Somit lässt sich durch geeignete Ausbildung des Antriebszahnrades eine leicht herstellbare Verbindung zwischen dem antreibbaren Werkzeughalter und der ersten oder zweiten Verzahnung realisieren, und somit der Werkzeughalter in einfacher Weise auswechseln.

Hinsichtlich der relativen Anordnung der Verzahnungen zu den Antriebszahnrädern sind die unterschiedlichsten Lösungen denkbar.

Eine Ausführungsform der erfindungsgemäßen Lösung sieht dabei vor, dass eine erste Verzahnungseingriffsstelle für das mit der ersten Verzahnung antreibbare Antriebszahnrad und eine zweite Verzahnungseingriffsstelle für das mit der zweiten Verzahnung antreibbare Antriebszahnrad des in der jeweiligen Werkzeugaufnahme sitzenden Werkzeughalters sich hinsichtlich ihrer Position bezogen auf die Revolverachse in radialer und/oder axialer Richtung unterscheiden.

Damit besteht die Möglichkeit, die Verzahnungen so anzuordnen, dass diese wahlweise jeden der antreibbaren Werkzeughalter antreiben können, und zwar durch die Anordnung und Ausbildung des Antriebszahnrades, welches und dabei entweder die erste Verzahnungseingriffsstelle oder die zweite Verzahnungseingriffsstelle mit der jeweiligen ersten bzw. zweiten Verzahnung ausbildet.

Beispielsweise ist dabei vorgesehen, dass die erste und die zweite Verzahnungseingriffsstelle sich in ihrer radialen Position zur Revolverachse unterscheiden, jedoch beispielsweise nicht in ihrer axialen Position.

Das heißt, dass die Verzahnungseingriffsstellen in unterschiedlichem radialen Abstand von der Revolverachse angeordnet sind.

Eine andere vorteilhafte Lösung sieht vor, dass die erste und die zweite Verzahnungseingriffsstelle sich in ihrer axialen Position bezüglich der Revolverachse unterscheiden, jedoch nicht in ihrer radialen Position, das heißt, dass der radiale Abstand der Verzahnungseingriffsstellen derselbe ist, jedoch die Möglichkeit besteht, beispielsweise durch sich um relativ zur Werkzeugaufnahme unterschiedlich verlaufende Drehachsen drehende Antriebszahnräder der Werkzeughalter eine Verzahnungseingriffsstelle mit der ersten oder zweiten Verzahnung zu realisieren.

Eine weitere vorteilhafte Lösung sieht vor, dass die erste und die zweite Verzahnungseingriffsstelle sich in ihrer axialen und radialen Position bezüglich der Revolverachse unterscheiden. In diesem Fall besteht die Möglichkeit, beide Verzahnungseingriffsstellen durch identisch ausgebildete oder durch sich voneinander unterscheidende Antriebszahnräder zu realisieren.

Beispielsweise ist dabei vorgesehen, dass die in radialer Richtung zur Revolverachse radial außenliegende Verzahnungen mit Antriebszahnrädern zusammenwirken, die einen größeren Durchmesser aufweisen als Antriebszahnräder für weiter innenliegende Verzahnungen, so dass sich mit den verschiedenen Verzahnungen wechselwirkende Werkzeughalter einfach montieren lassen, wobei der Werkzeughalter je nach Verzahnung ein Antriebszahnrad trägt, das hinsichtlich seiner Erstreckung in radialer Richtung und seines Durchmessers an die Verzahnungseingriffsstelle angepasst ist.

Bei einer weiteren vorteilhaften Ausführungsform ist vorzugsweise vorgesehen, dass die Werkzeugantriebseinheit eine weitere Verzahnung aufweist.

Die mindestens eine weitere Verzahnung könnte prinzipiell mit einem eigenen Antriebsstrang, also beispielsweise durch einen eigenen Antrieb, antreibbar sein.

Zweckmäßigerweise ist dabei die mindestens eine weitere Verzahnung mit der ersten oder zweiten Verzahnung antriebsgekoppelt.

Im einfachsten Fall ist dabei die mindestens eine weitere Verzahnung fest mit der ersten oder zweiten Verzahnung verbunden und somit gleichzeitig mit dieser antreibbar.

Dabei ist vorzugsweise vorgesehen, dass jeder antreibbare Werkzeughalter mittels eines Antriebszahnrades mit der mindestens einen weiteren Verzahnung antreibbar ist.

Auch bei der mindestens einen weiteren Verzahnung ist vorgesehen, dass mindestens eine weitere Verzahnungseingriffsstelle für das mit der mindestens einen weiteren Verzahnung antreibbare Antriebszahnrad und die erste und die zweite Verzahnungseingriffsstelle für das mit der ersten und zweiten Verzahnung antreibbare Antriebszahnrad sich hinsichtlich ihrer Position bezogen auf die Revolverachse in radialer und/oder axialer Richtung unterscheiden.

Eine weitere vorteilhafte Ausführungsform sieht vor, dass die Werkzeugantriebseinheit mit einer dritten oder einer dritten und einer vierten Verzahnung versehen ist.

Hinsichtlich der Verbindung des Antriebszahnrads mit dem Werkzeughalter wurden bislang keine näheren Angaben gemacht.

Beispielsweise ist es in diesem Fall denkbar, dass das Antriebszahnrad für unterschiedliche Verzahnungseingriffsstellen jeweils anders ausgebildet ist.

So sieht eine vorteilhafte Ausführungsform vor, dass jeder Werkzeughalter eine Werkzeughalterantriebswelle aufweist, auf welche das Antriebszahnrad aufgesteckt ist.

Eine besonders vorteilhafte Lösung sieht jedoch vor, dass das Antriebszahnrad einen Zahnkranz aufweist, welcher auf der Werkzeughalterantriebswelle in Richtung einer Längsachse derselben in unterschiedlichen Positionen festlegbar ist.

In diesem Fall ist beispielsweise denkbar, dass der Zahnkranz durch Festlegung in zwei unterschiedlichen Positionen in Richtung der Längsachse der Werkzeughalterantriebswelle mit mindestens zwei unterschiedlichen Verzahnungen in Eingriff bringbar ist.

Zweckmäßigerweise sind in einem derartigen Fall alle Kronenverzahnungen so ausgebildet, dass sie eine identische Zahnform aufweisen, so dass der Zahnkranz mit den mindestens zwei Verzahnungen in Eingriff bringbar ist.

Darüberhinaus ist in diesem Fall vorzugsweise vorgesehen, dass die mindestens zwei Verzahnungen im Bereich mindestens einer Werkzeugaufnahme so relativ zueinander positionierbar sind, dass derselbe Zahnkranz durch Verschiebung in radialer Richtung zur Revolverachse und somit in Richtung der Längsachse der Werkzeughalterantriebswelle mit jeder der mindesten zwei Verzahnungen in Eingriff bringbar ist.

Alternativ oder ergänzend dazu ist es aber auch denkbar, dass Antriebszahnräder mit unterschiedlichen Durchmessern auf die Werkzeughalterantriebswelle aufsetzbar sind.

Vorzugsweise ist in diesem Fall vorgesehen, dass die Antriebzahnräder mit unterschiedlichen Durchmessern unterschiedliche Zähnezahlen aufweisen.

Noch vorteilhafter ist es, wenn die Antriebzahnräder mit unterschiedlichen Zähnezahlen identische Zahnformen aufweisen.

Hinsichtlich der Verbindung der Antriebszahnräder mit der Werkzeughalterantriebswelle wurden bislang keine näheren Angaben gemacht.

Beispielsweise wäre eine übliche Keil- oder Stiftverbindung zwischen dem Antriebszahnrad und der Werkzeughalterantriebswelle denkbar.

Eine besonders günstige Lösung sieht jedoch vor, dass die Werkzeughalterantriebswelle als Formschlussverbindungselement eine unrunde Außenkontur aufweist und dass die Antriebszahnräder als Formschlussverbindungselement eine entsprechend unrunde Innenkontur aufweisen.

Hinsichtlich der Anordnung der als Zahnkranz ausgebildeten Verzahnungen im Revolverkopf sind bislang keine näheren Angaben gemacht.

So sieht eine vorteilhafte Lösung vor, dass die erste Verzahnung und die zweite Verzahnung koaxial zueinander im Revolverkopf angeordnet sind.

Ferner wurden auch keine Angaben zur Anordnung der Verzahnungen relativ zur Revolverachse gemacht.

Eine vorteilhafte Lösung sieht vor, dass die erste Verzahnung koaxial zur Revolverachse im Revolverkopf angeordnet ist.

Alternativ oder ergänzend sieht eine weitere vorteilhafte Lösung vor, dass die zweite Verzahnung koaxial zur Revolverachse im Revolverkopf angeordnet ist. Prinzipiell könnten die erste Verzahnung und die zweite Verzahnung in verschiedenster Weise realisiert sein.

Die Verzahnungen könnten beispielsweise Kegelverzahnungen sein, die mit entsprechend ebenfalls als Kegelverzahnungen ausgebildeten Antriebszahnrädern der Werkzeughalter kämmen.

Eine besonders günstige Lösung sieht vor, dass die erste Verzahnung als Kronenverzahnung ausgebildet ist.

Eine derartige Kronenverzahnung hat den Vorteil, dass diese insbesondere dann, wenn sie sich in einer quer zur Revolverachse verlaufenden Ebene erstreckt, in einfacher Weise mit dem Antriebszahnrad in Eingriff bringbar ist.

Besonders dann, wenn die Kronenverzahnung sich in einer Ebene erstreckt, die senkrecht zur Revolverachse läuft, lassen sich die Antriebszahnräder mit der Kronenverzahnung in einfacher Weise in Eingriff bringen.

Aus diesem Grund sieht ebenfalls eine vorteilhafte Ausführungsform vor, dass die zweite Verzahnung als Kronenverzahnung ausgebildet ist.

Hinsichtlich der Anordnung der Kronenverzahnungen wurden im Zusammenhang mit der bisherigen Erläuterung der einzelnen Ausführungsbeispiele keine näheren Angaben gemacht.

So sieht eine besonders günstige Lösung vor, dass die Kronenverzahnungen an Kronenrädern angeordnet sind.

Insbesondere besteht dabei die Möglichkeit, das eine der Kronenräder innerhalb des anderen der Kronenräder anzuordnen.

Beispielsweise sind die Kronenräder in dem Revolverkopf koaxial zueinander angeordnet. Weiter ist es vorteilhaft, wenn die Kronenräder zu einer der Revolverachse angeordnet.

Eine besonders vorteilhafte Lösung hinsichtlich des Antriebs der Verzahnungen sieht vor, dass diese durch ineinander angeordnete Hohlwellen antreibbar sind.

Vorzugsweise sind dabei die Hohlwellen koaxial zueinander und insbesondere auch koaxial zur Revolverachse angeordnet.

Hinsichtlich der Lagerung des Revolverkopfes an dem Revolvergehäuse wurden im Zusammenhang mit der bisherigen Erläuterung der einzelnen Ausführungsbeispiele ebenfalls keine näheren Angaben gemacht.

So sieht eine vorteilhafte Lösung vor, dass der Revolverkopf über ein Übersetzungsgetriebe ins Langsame am Revolvergehäuse gelagert ist.

Ein derartiges Übersetzungsgetriebe ins Langsame könnte prinzipiell beliebig aufgebaut sein.

Eine besonders günstige Lösung sieht vor, dass das Übersetzungsgetriebe ins Langsame ein sogenanntes Zykloid- oder Cyclo-Getriebe oder ein sogenanntes Harmonic Drive Getriebe ist.

Zum Antrieb der Drehbewegungen des Revolverkopfes relativ zum Revolvergehäuse wurden bislang ebenfalls keine näheren Angaben gemacht.

So sieht insbesondere im Fall eines vorgesehenen Übersetzungsgetriebes ins Langsame eine zweckmäßige Lösung vor, dass das Untersetzungsgetriebe durch einen lageregelbaren, insbesondere drehlageregelbaren, Revolverantrieb antreibbar ist.

Das heißt, dass der Revolverantrieb den Revolverkopf aufgrund der Lageregelung stufenlos in einer gewünschten Stellung permanent halten kann und so ausgebildet ist, dass er auch durch das Übersetzungsgetriebe übertragene Drehmomente bis zu einer Drehmomentschwelle aufnehmen kann und somit den Revolverkopf stufenlos in einer beliebigen Position halten kann.

Ein derartiges Untersetzungsgetriebe schafft nicht nur die Möglichkeit, den Revolverkopf günstig am Revolvergehäuse zu lagern, sondern eröffnet auch die Möglichkeit, in einfacher Weise eine Verbindung zwischen den Antrieben und der ersten und zweiten Verzahnung dadurch herzustellen, dass die Hohlwellen zum Antrieb der Verzahnungen das Untersetzungsgetriebe durchsetzen.

Damit ist in einfacher Weise eine günstige Verbindung zwischen den Verzahnungen im Revolverkopf und den Antrieben geschaffen.

Vorzugsweise sind dabei die Antriebe für die Verzahnungen im Revolvergehäuse und somit stationär und nicht mit dem Revolverkopf mitdrehend angeordnet.

Der Vorteil der Erfindung ist darin zu sehen, dass sich damit die Zeiten für den Werkzeugwechsel reduzieren lassen, da die Möglichkeit besteht, dass neu in ein Eingriff am Werkstück zu bringende Werkzeug bereits anzutreiben und auf die gewünschte Drehzahl zu bringen, bevor das noch im Eingriff stehende Werkzeug außer Eingriff mit dem Werkstück kommt und somit für den Wechsel von einem in Bearbeitungsstellung stehenden Werkzeug zum anderen in Bearbeitung stellenden Werkzeug lediglich die Zeit für die Drehung des Revolverkopfes erforderlich ist, um das eine Werkzeug außer Eingriff zu bringen und das andere Werkzeug in Eingriff zu bringen.

Besonders günstig lassen sich die Zeiten beim Wechsel der Bearbeitung von einem Werkzeug zum anderen Werkzeug dann gestalten, wenn ein erster Werkzeughalter der ersten Gruppe und ein zweiter Werkzeughalter der zweiten Gruppen in benachbarten Werkzeugaufnahmen des Revolverkopfes angeordnet sind, so dass damit auch die Drehung des Revolverkopfes beim Wechsel der Bearbeitung von einem Werkzeug zum anderen Werkzeug möglichst wenig Zeit in Anspruch nimmt.

Weitere Merkmale und Vorteil sind Gegenstand der nachfolgenden Beschreibung sowie der zeichnerischen Darstellung einiger Ausführungsbeispiele.

In der Zeichnung zeigen:
- Fig. 1: eine schematische Darstellung eines Ausführungsbeispiels einer erfindungsgemäßen Werkzeugmaschine;

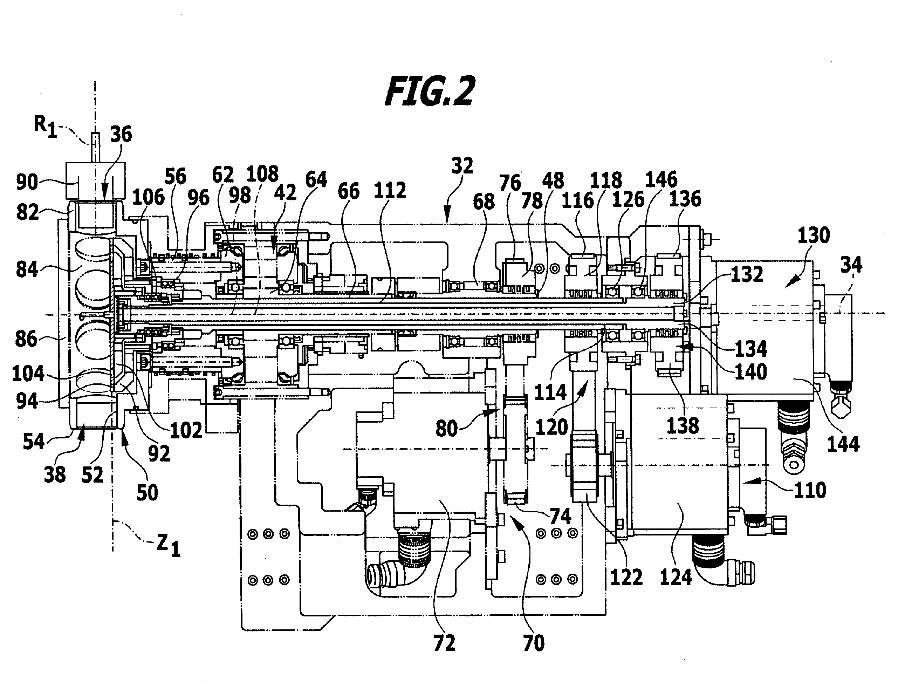

- Fig. 2: einen Schnitt längs Linie 2-2 in Fig. 1;
- Fig. 3: eine vergrößerte perspektivische Darstellung einer Werkzeugantriebseinheit für erste Werkzeughalter und zweite Werkzeughalter;
- Fig. 4: eine in Bezug auf noch weiter vergrößerte perspektivische Darstellung der Wechselwirkung einer ersten Kronenverzahnung und einer zweiten Kronenverzahnung mit Antriebszahnrädern der ersten Werkzeughalter und zweiten Werkzeughalter;
- Fig. 5: einen vergrößerten Schnitt durch den in Fig. 2 dargestellten Revolverkopf mit einem ersten eingesetzten Werkzeughalter;
- Fig. 6: einen Schnitt ähnlich Fig. 5 mit einem zweiten eingesetzten Werkzeughalter;
- Fig. 7: eine schematische Darstellung eines Wechsels von einem Werkzeug W1 zu einem Werkzeug W2 bei der Bearbeitung eines Werkstücks;
- Fig. 8: einen teilweisen Längsschnitt durch ein Ausführungsbeispiel eines ersten Werkzeughalters;
- Fig. 9: einen teilweisen Längsschnitt ähnlich Fig. 8 durch einen zweiten Werkzeughalter;
- Fig. 10: eine Draufsicht in Richtung des Pfeils A in Fig. 8;
- Fig. 11: einen vergrößerten Schnitt in einem Bereich B in Fig. 9
- Fig. 12: einen Schnitt ähnlich Fig. 2 durch ein zweites Ausführungsbeispiel eines erfindungsgemäßen Werkzeugrevolvers;
- Fig. 13: einen Schnitt längs Linie 13-13 in Fig. 12 mit gestrichelter zusätzlicher Darstellung einer über der Schnittebene liegenden ersten Kronenverzahnung;
- Fig. 14: ein vergrößerter Schnitt des zweiten Ausführungsbeispiels gemäß Fig. 12 im Bereich des Revolverkopfes;
- Fig. 15: eine ausschnittsweise Schnittdarstellung einer weiteren Form eines möglichen Antriebs eines Werkzeughalters;
- Fig. 16: einen Schnitt ähnlich Fig. 2 durch ein drittes Ausführungsbeispiel eines erfindungsgemäßen Werkzeugrevolvers;
- Fig. 17: einen Schnitt längs Linie 17-17 in Fig. 16 mit gestrichelt dargestellten über der Schnittebene liegenden Kronenverzahnungen und
- Fig. 18: eine vergrößerte Darstellung des Schnitts durch den Revolverkopf beim dritten Ausführungsbeispiel gemäß Fig. 16 mit in diesem angeordneten ersten und zweiten Werkzeughaltern.

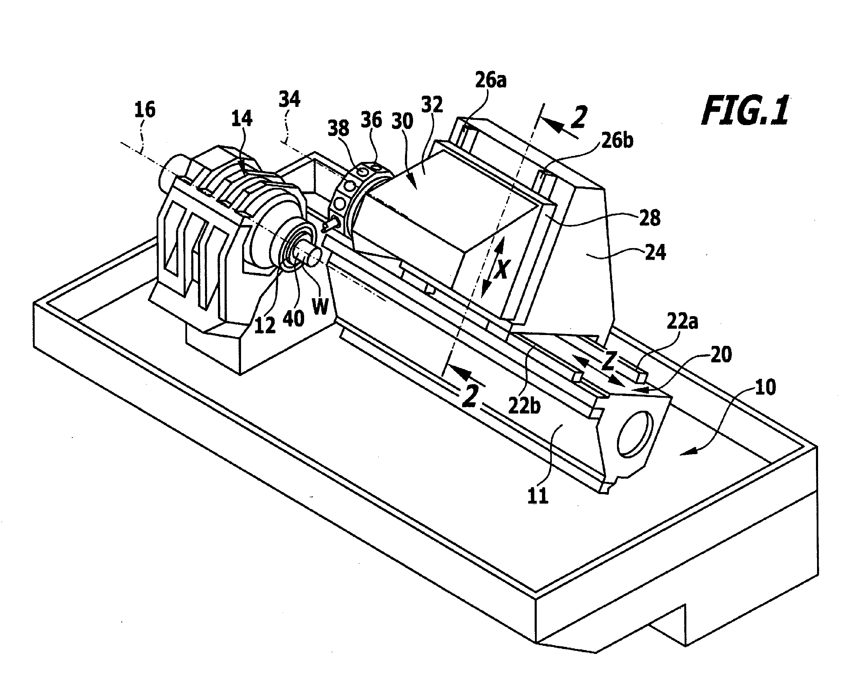

Ein in Fig. 1 dargestelltes Ausführungsbeispiel einer erfindungsgemäßen Werkzeugmaschine umfasst ein Maschinengestell 10, insbesondere mit einem Maschinenbett 11, an welchem ein Werkstückträger 12, beispielsweise ausgebildet als in einem Spindelgehäuse 14 um eine Spindelachse 16 drehbar gelagerte Werkstückspindel 12, angeordnet ist, wobei zum Beispiel das Spindelgehäuse 14 stationär am Maschinengestell 10 angeordnet ist.

Es ist aber auch denkbar, das Spindelgehäuse 14 durch ein Schlittensystem relativ zum Maschinengestell 10 bewegbar anzuordnen.

Das Maschinengestell 10 umfasst ferner einen Führungskörper 20, welcher beispielsweise sich parallel zur Spindelachse 16 erstreckende Längsführungen 22a, 22b aufweist, auf welchen ein sogenannter Z-Schlitten 24 parallel zur Spindelachse 16 und somit in einer Z-Richtung der Werkzeugmaschine verschiebbar geführt ist.

Der Z-Schlitten 24 trägt seinerseits noch quer zur Spindelachse 16 und insbesondere auch quer zu den Längsführungen 22a, 22b verlaufende Querführungen 26a und 26b, die sich in einer sogenannten X-Richtung der Werkzeugmaschine erstrecken und auf denen ein sogenannter X-Schlitten 28 angeordnet ist.

Der Z-Schlitten 24 und der X-Schlitten 28 bilden eine Vorschubeinheit, mit welcher ein Werkzeug relativ zum Werkstückträger 12 bewegbar ist.

Auf die X-Schlitten 28 ist als Werkzeugträger 30 ein bezeichneter Werkzeugrevolver 30 angeordnet, welcher ein stationär auf dem X-Schlitten 28 sitzendes Revolvergehäuse 32 umfasst, an welchem ein um eine Revolverachse 34 drehbarer Revolverkopf 36 gelagert ist.

Der Revolverkopf 36 weist dabei eine Vielzahl von beispielsweise in gleichen radialen Abständen von der Revolverachse 34 und beispielsweise in gleichen Winkelabständen um die Revolverachse 34 angeordnete Werkzeugaufnahmen 38 auf, die so ausgebildet sind, dass in jede von diesen ein Werkzeug W zur Bearbeitung eines in dem Werkstückträger 12 gehaltenen Werkstücks 40 einsetzbar ist.

Die drehbare Lagerung des Revolverkopfes 36 relativ zum Revolvergehäuse 32 erfolgt beispielsweise durch ein ins Langsame hochübersetztes Übersetzungsgetriebe, insbesondere ein Zykloid- oder Cyclo-Getriebe 42, welches in dem Revolvergehäuse 32 gehalten ist und ein Übersetzungsgetriebe darstellt durch welches der Revolverkopf 36 um die Revolverachse 34 drehbar am Revolvergehäuse 32 gelagert ist und zur Durchführung von Drehbewegungen um die Revolverachse 34 antreibbar ist.

Der Revolverkopf 36 umfasst seinerseits ein Revolverkopfgehäuse 50, welches mit den Werkzeugaufnahmen 38 versehen ist, die beispielsweise radial zur Revolverachse 34 ausgerichtete Durchbrüche 52 sowie quer zu den Durchbrüchen 52 verlaufende äußere Anlageflächen 54 aufweisen, wobei die Durchbrüche 52 beispielsweise symmetrisch zu einer Radialebene R₁ angeordnet sind, die senkrecht zur Revolverachse 34 ausgerichtet ist, und wobei die Anlageflächen 54 senkrecht zur Radialebene R₁ und parallel zur Revolverachse 34 verlaufen.

Der Revolverkopf 36 weist ferner einen Revolverkopfansatz 56 auf, der drehfest mit einer Abtriebsseite 62 des Zykloid- oder Cyclo-Getriebes 42 verbunden ist, das an einer Antriebsseite 64 mit einer Hohlwelle 66 verbunden ist, die zusätzlich noch in einer Lagereinheit 68 um die Revolverachse 34 drehbar am Revolvergehäuse 32 gelagert ist.

Zum Drehen des Revolverkopfes 36 relativ zum Revolvergehäuse 32 ist ein als Ganzes mit 70 bezeichneter Revolverkopfantrieb vorgesehen, welcher einen Revolverantriebsmotor 72 aufweist, der über Zahnriemengetriebe 80, umfassend ein drehbar vom Revolverantriebsmotor 72 angetriebenes Zahnriemenrad 74, einen Zahnriemen 76 und ein fest auf die Hohlwelle 66 sitzendes Zahnriemenrad 78, antreibt.

Vorzugsweise ist der Revolverkopfantrieb 70 als NC-Achsantrieb ausgebildet, das heißt, dass der Revolverkopf 36 in beliebige Drehstellungen relativ zum Revolvergehäuse 32 um die Revolverachse 34 drehbar ist, und außerdem den Revolverkopf 36 in den jeweiligen Drehstellungen durch Lageregelung halten kann, wie in der PCT-Anmeldung WO 2010/031733 beschrieben.

Das Revolverkopfgehäuse 50 umfasst seinerseits einen ringförmig ausgebildeten Außenkörper 82, welcher einen freien Innenraum 84 umschließt, in welchen die Durchbrüche 52 der Werkzeugaufnahmen 38 münden, so dass ein Antrieb von den in den Werkzeugaufnahmen 38 eingesetzten Werkzeughaltern 90 von Seiten des Innenraums 84 realisierbar ist, wobei der Innenraum, 84 durch einen dem Revolverkopfansatz 56 gegenüberliegenden Revolverkopfdeckel 86 verschlossen ist.

Hierzu ist in dem Innenraum 84 des Revolverkopfes 36 ein erstes äußeres Kronenrad 92 vorgesehen, welches eine äußere Kronenverzahnung 94 aufweist, deren Zahnspitzen in einer ersten Zahnebene Z₁ liegen, die senkrecht zur Revolverachse 34 und parallel zur Radialebene R₁ verläuft.

Eine drehbare Lagerung des ersten Kronenrades 92 erfolgt durch eine Radiallagereinheit 96, die das erste Kronenrad 92 im Bereich des Revolverkopfansatzes 54 relativ zum Revolverkopfansatz 56 um eine zur Revolverachse 34 koaxiale Drehachse 98 drehbar lagert.

Ferner ist in dem Innenraum 84 des Revolverkopfes 36, umschlossen vom ersten äußeren Kronenrad 92, ein zweites inneres Kronenrad 102 vorgesehen, welches eine zweite Kronenverzahnung 104 aufweist, die bei diesem Ausführungsbeispiel Zahnspitzen aufweist, die ebenfalls in der ersten Zahnebene Z₁ liegen.

Darüberhinaus ist zur drehbaren Lagerung des zweiten inneren Kronenrades 102 eine Radiallagereinheit 106 vorgesehen, welche das zweite innere Kronenrad 102 relativ zum ersten äußeren Kronenrad 92 ebenfalls im Bereich des Revolverkopfansatzes 54 um eine zur Drehachse 98 und Revolverachse 34 koaxiale Drehachse 108 drehbar lagert, so dass dadurch auch wiederum indirekt über die Radiallagereinheit 96 eine Drehlagerung des zweiten inneren Kronenrades 102 relativ zum Revolverkopfansatz 64 erfolgt.

Vorzugsweise sind die Kronenverzahnungen 94 und 104 durch Zähne mit identischer Zahnform gebildet, mit dem einzigen Unterschied, dass die zweite innere Kronenverzahnung 104 weniger Zähne aufweist als die erste äußere Kronenverzahnung 94.

Eine Drehverbindung zwischen einem ersten Kronenradantrieb 110 und dem ersten äußeren Kronenrad 92 erfolgt über eine Hohlwelle 112, welche koaxial zur das Cyclo-Getriebe 42 antreibenden Hohlwelle 66 und innerhalb derselben angeordnet ist und sich von dem ersten Kronenrad 92 durch die Hohlwelle 66 bis zu dem ersten Kronenradantrieb 110 erstreckt, der auf einer dem Revolverkopf 36 gegenüberliegenden Seite des Revolverkopfantriebs 70 angeordnet ist, so dass eine über ein dem Revolverkopf 36 abgewandtes Ende 48 überstehender Endbereich 114 der Hohlwelle 112 mittels eines Zahnriemengetriebes 120 antreibbar ist, umfassend ein durch einen Zahnriemen 116 antreibbares Zahnriemenrad 118, der wiederum über ein Zahnriemenrad 122 eines ersten Kronenradantriebsmotors 124 des ersten Kronenradantriebs verläuft.

Vorzugsweise ist die Hohlwelle 112 in dem Endbereich 114 durch eine weitere Radiallagereinheit 126 relativ zum Revolvergehäuse 32 drehbar gelagert.

Zum Antrieb des zweiten Kronenrades 102 ist ein zweiter Kronenradantrieb 130 vorgesehen, welcher mittels einer Hohlwelle 132 mit dem zweiten inneren Kronenrad 102 gekoppelt ist, wobei die Hohlwelle 132 mit einem Endbereich 134 über die Hohlwelle 112 auf einer dem Revolverkopf 36 gegenüberliegenden Seite übersteht und mittels eines Zahnriemengetriebes 140 antreibbar ist, das ein auf dem Endbereich 134 sitzendes Zahnriemenrad 138 mit einem Zahnriemen 136 antreibt, wobei der Zahnriemen 136 seinerseits wiederum über ein Zahnriemenrad 142 eines zweiten Kronenradantriebsmotors 144 verläuft.

Vorzugsweise ist auch die Hohlwelle 132 über eine Drehlagereinheit 146, die den Endbereich 134 desselben aufnimmt, drehbar in dem Revolvergehäuse 56 gelagert.

Der erste Kronenradantrieb 110 mit dem Riemengetriebe 120, der Hohlwelle 112 und dem Kronenrad 92 sowie der zweite Kronenradantrieb 130 mit dem Riemengetriebe 140 der Hohlwelle 132 und dem zweiten Kronenrad 102 bilden eine Werkzeugantriebseinheit 150 für den Revolverkopf 36.

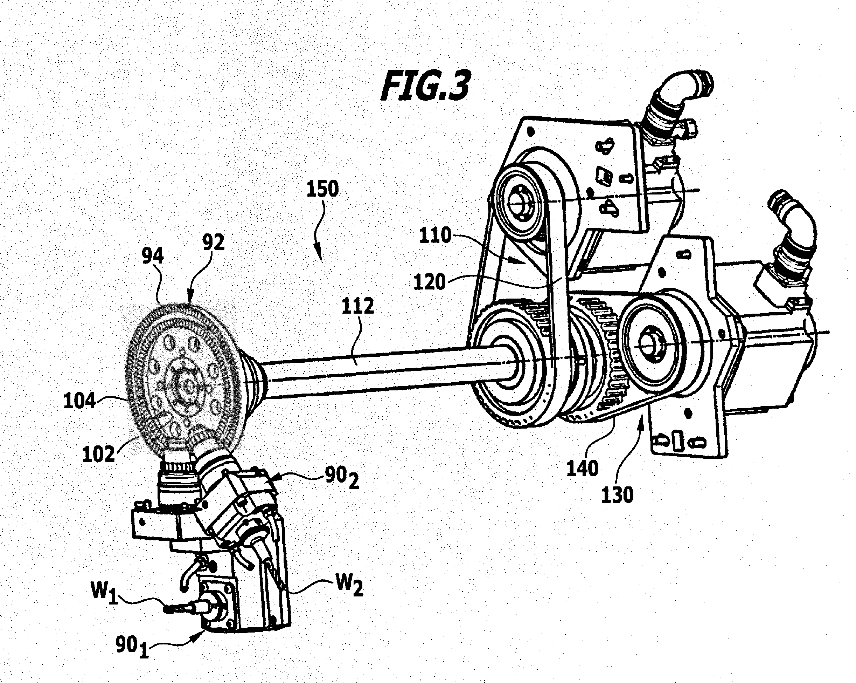

Wie in Fig. 3 dargestellt, eröffnen der erste Kronenradantrieb 110 und der zweite Kronenradantrieb 130 die Möglichkeit, das erste äußere Kronenrad 92 mit der äußeren Kronenverzahnung 94 und das zweite innere Kronenrad 102 mit der zweiten inneren Kronenverzahnung 104 unabhängig voneinander anzutreiben.

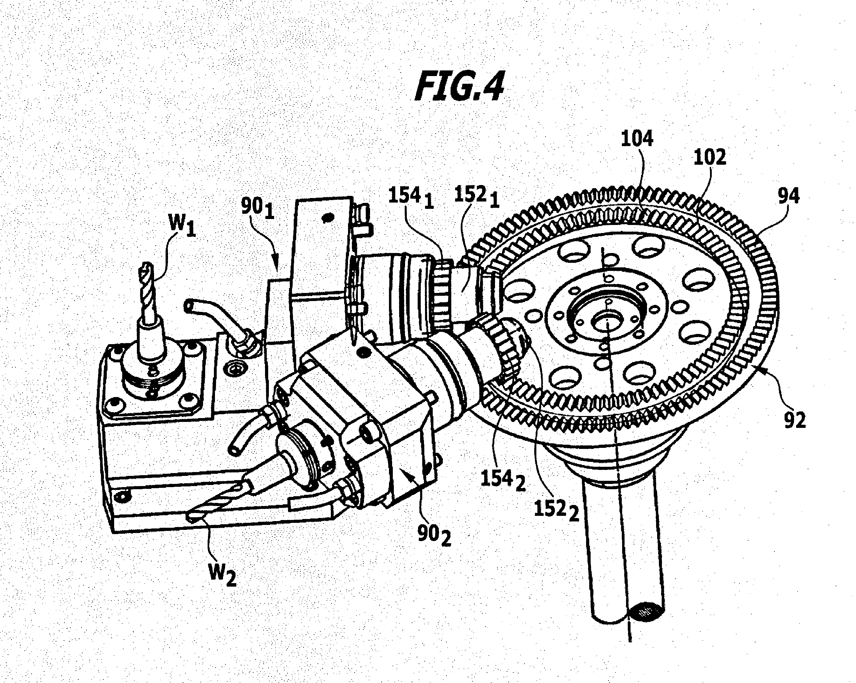

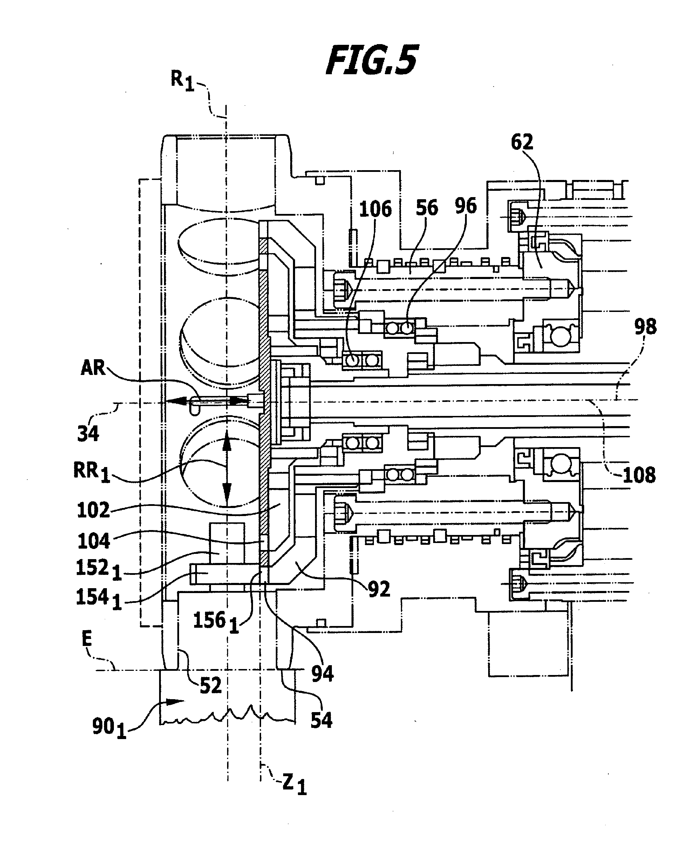

Somit besteht die Möglichkeit, wie in Fig. 4 noch vergrößert dargestellt, mit dem ersten äußeren Kronenrad 92 mindestens einen oder mehrere in die Werkzeugaufnahmen 38 eingesetzte erste Werkzeughalter 90₁ dadurch anzutreiben, dass der mindestens eine erste Werkzeughalter 90₁ auf einer in den Innenraum 84 des Revolverkopfgehäuses 96 hineinragenden Werkzeughalterantriebswelle 152₁ ein Antriebszahnrad 154₁ trägt, welches so angeordnet ist, dass dieses nur mit der ersten äußeren Kronenverzahnung 94 im Bereich einer ersten Verzahnungseingriffsstelle 156₁ kämmt, jedoch nicht mit der zweiten inneren Kronenverzahnung 104 (Fig. 5).

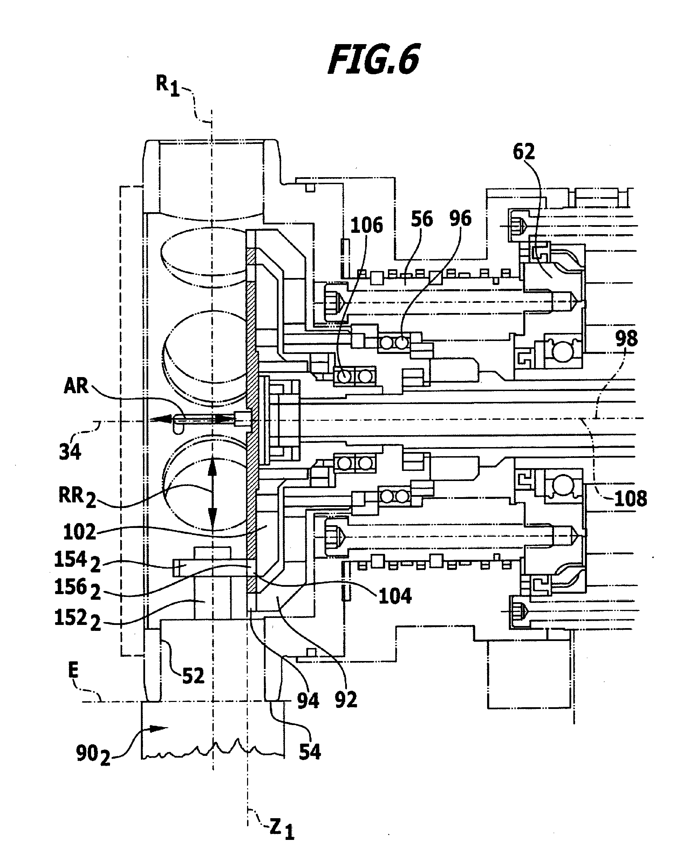

An dem Revolverkopf 36 können außerdem mindestens einer oder mehrere in die Werkzeugaufnahmen 38 eingesetzte zweite Werkzeughalter 90₂ angeordnet werden, deren Werkzeughalterantriebswelle 152₂ ein Antriebszahnrad 154₂ trägt, welches nur mit der zweiten inneren Kronenverzahnung 104 in einer zweiten Verzahnungseingriffsstelle 156₂ kämmt, jedoch nicht mit der äußeren Kronenverzahnung 94 (Fig. 6).

Bei diesem Ausführungsbeispiel liegen die Verzahnungseingriffsstellen 156₁ und 152₂ in radialer Richtung RR zur Revolverachse 34 versetzt zueinander, jedoch in axialer Richtung AR der Revolverachse in derselben Position.

Ferner liegen beide Verzahnungseingriffsstellen 156₁ und 156₂ in durch die Revolverachse 34 und die jeweilige radiale Richtung RR₁ oder RR₂ aufgespannten Ebenen, welche mit der jeweiligen Zeichenebene in Fig. 5 und Fig. 6 zusammenfällt.

Außerdem fallen bei diesem Ausführungsbeispiel die radialen Richtungen RR₁ und RR₂ mit Drehachsen der Werkzeughalterantriebswellen 152₁, 152₂ zusammen.

Ferner stellen die radialen Richtungen RR₁ und RR₂ Symmetrieachsen der Werkzeughalteraufnahmen 38 dar, so dass beispielsweise die Durchbrüche 52 rotationssymmetrische Flächen zu den radialen Richtungen RR₁ und RR₂ aufweisen und die Anlageflächen 54 für die Werkzeughalter 90 in jeweils senkrecht zu den radialen Richtungen RR₁ bzw. RR₂ und jeweils in gleichem radialen Abstand von der Revolverachse 34 verlaufenden Ebenen E liegen.

Bei einer derartigen Konstellation besteht die Möglichkeit, zum einen mit dem ersten Kronenradantrieb 110 die ersten Werkzeughalter 90₁ und mit dem zweiten Kronenradantrieb 130 die zweiten Werkzeughalter 90₂ drehbar anzutreiben, wobei der Antrieb der ersten Werkzeughalter 90₁ und der zweiten Werkzeughalter 90₂ völlig unabhängig voneinander erfolgen kann, da der erste Kronenradantrieb 110 und der zweite Kronenradantrieb 130 ebenfalls unabhängig voneinander von einer Werkzeugmaschinensteuerung betreibbar sind.

In die Werkzeugaufnahmen 38 des ersten Revolverkopfes 36 lassen sich nun mehrere erste Werkzeughalter 90₁ und mehrere zweite Werkzeughalter 90₂ einsetzen, wobei stets die ersten Werkzeughalter 90₁ durch das erste Kronenrad 92 antreibbar sind und die zweiten Werkzeughalter 90₂ durch das zweite Kronenrad 102, und alle ersten Werkzeughalter 90₁ eine erste Gruppe G₁ und alle zweiten Werkzeughalter 90₂ eine zweite Gruppe G₂ bilden, so dass insgesamt zwei völlig unterschiedlich antreibbare Gruppen G₁ und G₂ von Werkzeughaltern 90₁ und 90₂ in dem Revolverkopf 36 vorhanden sein können, wobei die erste Gruppe G₁ durch den ersten Kronenradantrieb 110 und die zweite Gruppe G₂ durch den zweiten Kronenradantrieb 130 antreibbar ist.

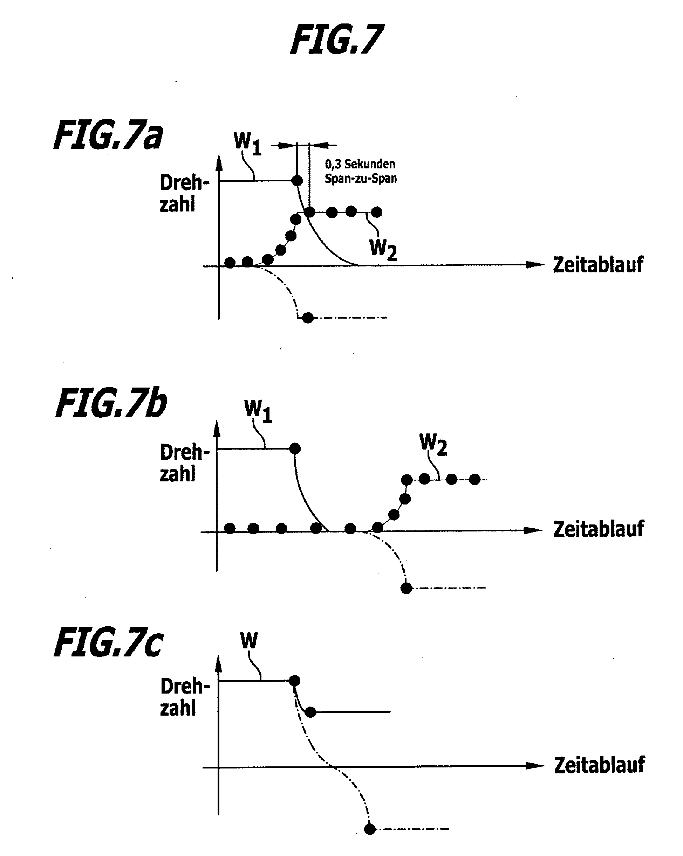

Die Möglichkeit eine erste Gruppe G₁ von Werkzeughaltern 90₁ und eine zweite Gruppe G₂ von Werkzeughaltern 90₂ völlig unabhängig voneinander anzutreiben, ermöglicht es, bei einem Wechsel der Bearbeitung des Werkstücks 40 von einem Werkzeughalter 90₁, einer Gruppe G₁, G₂ zu einem anderen Werkzeughalter 90₂, 90₁ einer anderen Gruppe G₂, G₁ schnell zu wechseln, insbesondere Werkzeuge W₁ und W₂ dieser Werkzeughalter 90₁, 90₂ möglichst rasch aufeinander folgend in Eingriff zu bringen, da das eine Werkzeug W₁, das beispielsweise noch in Bearbeitungseingriff ist, seine Drehzahl unverändert beibehalten kann, während das zweite Werkzeug W₂ bereits auf die erforderliche Drehzahl gebracht wird, so dass bei einem Weiterdrehen des Revolverkopfes 36, um nach dem Werkzeug W₁ das Werkzeug W₂ in Eingriff zu bringen, das Werkzeug W₂, wenn es in eine für eine Bearbeitung des Werkstücks 40 geeignete Stellung kommt, bereits die für die Bearbeitung vorgesehene Drehzahl aufweist, während das Werkzeug W₁, das gerade aus der Bearbeitung kommt noch die für die Bearbeitung vorgesehene Drehzahl hat (Fig. 7a), so dass im Gegensatz zum bekannten Einzelantrieb (Fig. 7b), oder im Gegensatz zum Summenantrieb (Fig. 7c), trotz unterschiedlicher Drehzahlen der Werkzeuge W₁ und W₂ ein Wechsel in der Bearbeitung des Werkstücks 40 von dem Werkzeug W₁ zu dem Werkzeug W₂ schnellstmöglich erfolgen kann, vorzugsweise in einer Zeit erfolgen kann, die nur durch die Zeitdauer bestimmt ist, die benötigt wird, um mittels des Revolverkopfantriebs 70 durch Bewegen des Revolverkopfes 36, insbesondere umfassend ein Drehen desselben, das Werkzeug W₁ außer Zerspanungseingriff und das Werkzeug W₂ in Zerspanungseingriff zu bringen.

Im Vergleich zum Einzelantrieb (Fig. 7b) entfällt dabei die Zeit, die erforderlich, um das außer Eingriff kommende Werkzeug still zu setzen und vom Werkzeugantrieb zu entkoppeln und das nächstfolgende Werkzeug wieder mit dem Werkzeugantrieb zu koppeln und dann wieder auf Drehzahl zu beschleunigen.

Im Vergleich zum Summenantrieb (Fig. 7c) entfällt die Zeit, die erforderlich ist, um die Drehzahl von der Drehzahl für das eine Werkzeug auf die Drehzahl für das andere Werkzeug zu ändern, bevor das andere Werkzeug wieder in Eingriff mit dem Werkstück 40 kommt.

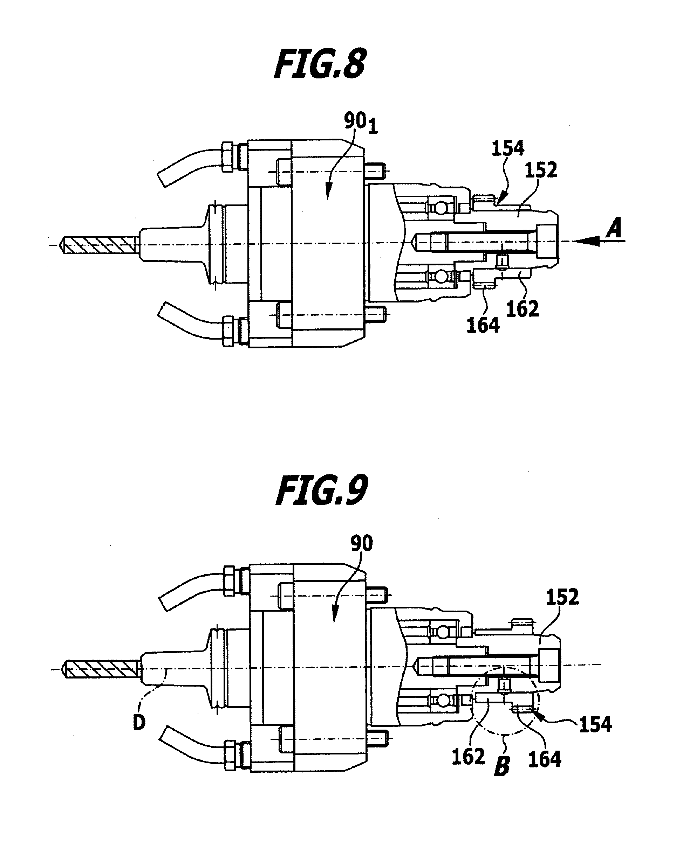

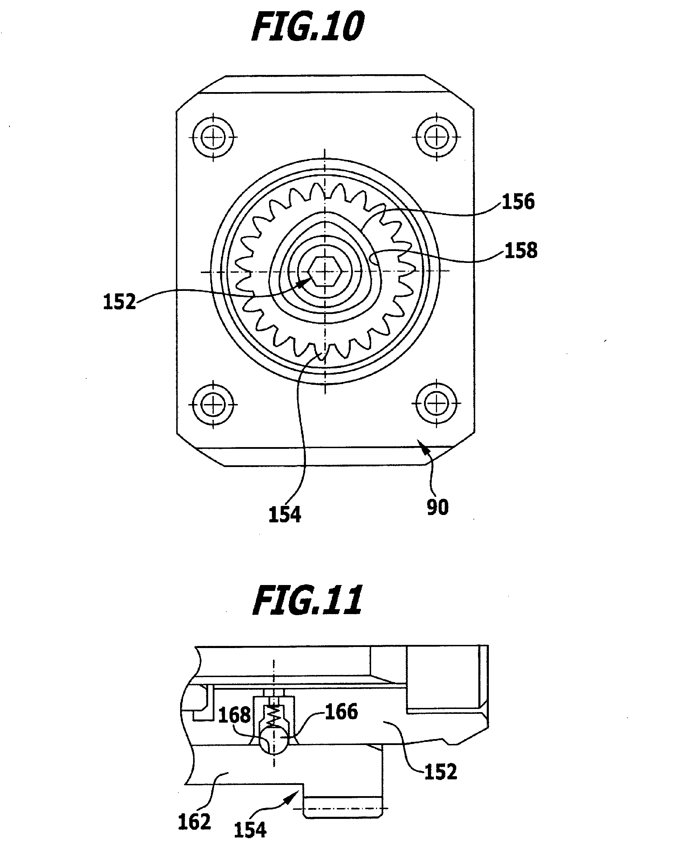

Um zu vermeiden, dass für die erste Gruppe G₁ anders aufgebaute Werkzeughalter erforderlich sind als für die zweite Gruppe G₂, sind, wie in Fig. 8 bis 11 dargestellt, die Werkzeughalter 90 stets so aufgebaut, dass deren Werkzeughalterantriebswelle 152 identisch ist, und, wie beispielsweise in Fig. 10 dargestellt, eine unrunde Außenkontur 156 aufweist, auf welche das Antriebszahnrad 154 mit seiner entsprechenden unrunden Innenkontur 158 aufsteckbar ist, so dass dadurch ohne weitere Fixierung eine drehfeste Verbindung zwischen dem jeweiligen Antriebszahnrad 154 und der jeweiligen Werkzeughalterantriebswelle 152 realisierbar ist.

Darüberhinaus besteht die Möglichkeit, das Antriebszahnrad 154 in zwei gegeneinander um 180° verdrehte Stellungen auf die jeweiligen Werkzeughalterantriebswelle 152 aufzustecken.

Hierzu umfasst das Antriebszahnrad 154 eine Aufsteckhülse 162 und einen in axialer Richtung auf einer Seite der Aufsteckhülse 162 angeordneten Zahnkranz 164 wobei das Antriebzahnrad 154 zum in Eingriff bringen mit der ersten Kronenverzahnung 94, wie in Fig. 8 dargestellt, so auf die Werkzeughalterantriebswelle 152 aufsteckbar ist, dass der Zahnkranz 164 auf einer dem Werkzeughalter 90 zugewandten Seite der Aufsteckhülse 162 steht, während in der zweiten, um 180° gedrehten Stellung, wie in Fig. 9 dargestellt, der Zahnkranz 164 auf einer dem Werkzeughalter 90 abgewandten Seite der Aufsteckhülse 162 steht und in dieser Stellung mit der zweiten Kronenverzahnung 104 in Eingriff bringbar ist.

Eine axiale Fixierung des Antriebszahnrads 154 in den beiden Stellungen auf der Werkzeughalterantriebswelle 152 lässt sich beispielsweise dadurch realisieren, dass die Werkzeughalterantriebswelle 152 mit einem Rastelement 166 versehen ist, welches in eine Rastausnehmung 168 in der Aufsteckhülse 162 eingreift, wenn das Antriebszahnrad 154 auf der Werkzeughalterantriebswelle 152 entweder in der in Fig. 8 dargestellten ersten Stellung oder in der in Fig. 9 dargestellten zweiten Stellung korrekt positioniert ist.

Da die erste Kronenverzahnung 94 und die zweite Kronenverzahnung 104 dieselbe Zahnform aufweisen, und der Zahnkranz 164 des Antriebszahnrades 154 eine entsprechende identische Zahnform aufweist, besteht die Möglichkeit, mit ein und demselben Zahnrad 154 wahlweise einen Antrieb des jeweiligen Werkzeughalters 90 über die erste Kronenverzahnung 94 oder die zweite Kronenverzahnung 104 zu realisieren, wenn diese außerdem noch - wie bereits erwähnt - mit ihren Zahnspitzen in derselben Zahnebene Z₁ liegen.

Hierzu ist es allerdings erforderlich, dass im Bereich der Werkzeugaufnahme 38, in welcher ein Einsetzen eines Werkzeughalters 90 erfolgt, die erste Kronenverzahnung 94 und die zweite Kronenverzahnung 104 so relativ zueinander ausgerichtet sind, dass die Zähne an der Stelle, an der das Antriebszahnrad 154 mit der zweiten Kronenverzahnung 104 in Eingriff gebracht werden soll, miteinander fluchten, so dass die Zähne des Zahnkranzes 164 in radialer Richtung zur Revolverachse 34 zunächst mit der ersten äußeren Kronenverzahnung 94 in Eingriff kommen und dann in radialer Richtung zur Revolverachse 34 weiter auf die Revolverachse 34 zu bewegbar sind, um wiederum mit der ersten äußeren Kronenverzahnung 94 außer Eingriff zu kommen und in Eingriff mit der inneren zweiten Kronenverzahnung 104 zu kommen.

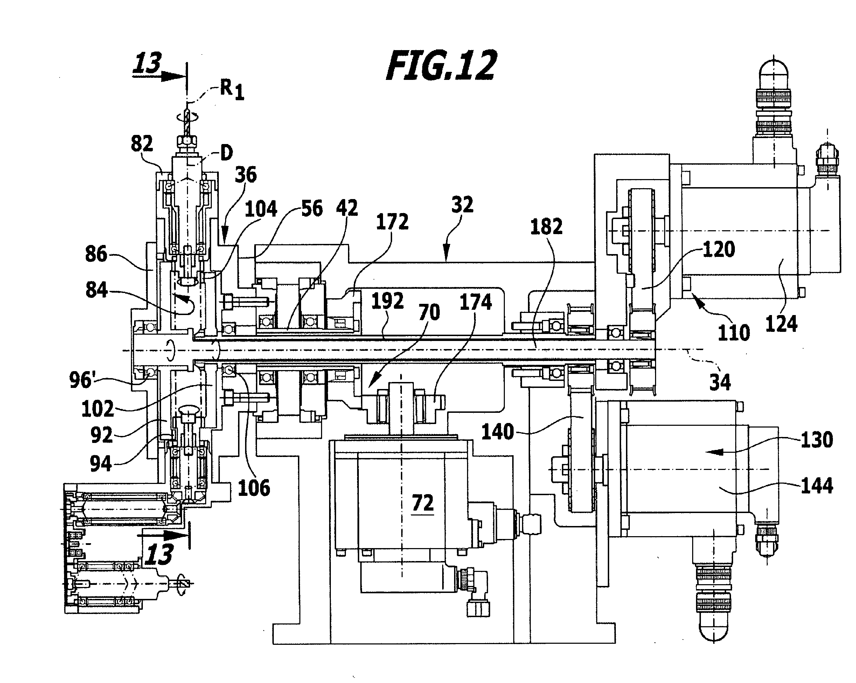

Bei einem zweiten Ausführungsbeispiel einer erfindungsgemäßen Werkzeugmaschine ist, wie in Fig. 12 dargestellt, der Revolverkopf 36 in vergleichbarer Weise an dem Revolvergehäuse 32 gelagert, wie im ersten Ausführungsbeispiel dargestellt, allerdings trägt das Cyclo-Getriebe 42 seiner dem Revolverkopf 36 gegenüberliegenden Antriebseite 64 ein Antriebskronenrad 172, welches mit Antriebszahnrad 174 des Revolverantriebsmotors 72 in Eingriff steht, so dass in diesem Fall der Revolverkopfantrieb 70 im Gegensatz zum ersten Ausführungsbeispiel das Cyclo-Getriebe 42 nicht über ein Zahnriemengetriebe antreibt.

Im Übrigen ist die Funktion des Revolverkopfantriebs 70 in Verbindung mit dem Antriebskronenrad 172 und dem Abtriebszahnrad 174 jedoch identisch.

Im Gegensatz zum ersten Ausführungsbeispiel liegen allerdings das erste äußere Kronenrad 92 und das zweite innere Kronenrad 102 nicht mit ihren Zahnspitzen in der ersten Zahnebene Z₁ und auf derselben Seite der Radialebene R₁.

Das erste Kronenrad 92 und das zweite Kronenrad 102 liegen auf unterschiedlichen Seiten der Radialebene R₁, in welcher auch die Drehachsen D der Werkzeughalterantriebswellen 152 liegen.

Beispielsweise liegt das erste äußere Kronenrad 92 auf einer dem Revolverkopfdeckel 86 zugewandten Seite im Innenraum 84 des Revolverkopfgehäuses 50 und ist beispielsweise auch durch die Radiallagereinheit 96' relativ zum Revolverkopfgehäuse 56 drehbar gelagert und eine mit dem ersten Kronenrad 92 verbundene Hohlwelle 182 ist mit dem ersten Kronenradantrieb 110 antreibbar. Wobei zwischen dem ersten Kronenradantriebsmotor 124 und der Hohlwelle 182 das Zahnriemengetriebe 120 vorgesehen ist.

Das zweite Kronenrad 102 mit der inneren Kronenverzahnung 104 ist mit der Radiallagereinheit 106 drehbar im Bereich des Revolverkopfansatzes gelagert und über eine Hohlwelle 192, welche die Antriebswelle 182 aufnimmt, dem zweiten Kronenradantrieb 130 gekoppelt, welcher ebenfalls zwischen dem Kronenradantriebsmotor 144 und Hohlwelle 192 das Zahnriemengetriebe 140 aufweist, das in gleicher Weise, wie beim ersten Ausführungsbeispiel beschrieben, den zweiten Kronenradantriebsmotor 144 mit der Hohlwelle 192 verbindet.

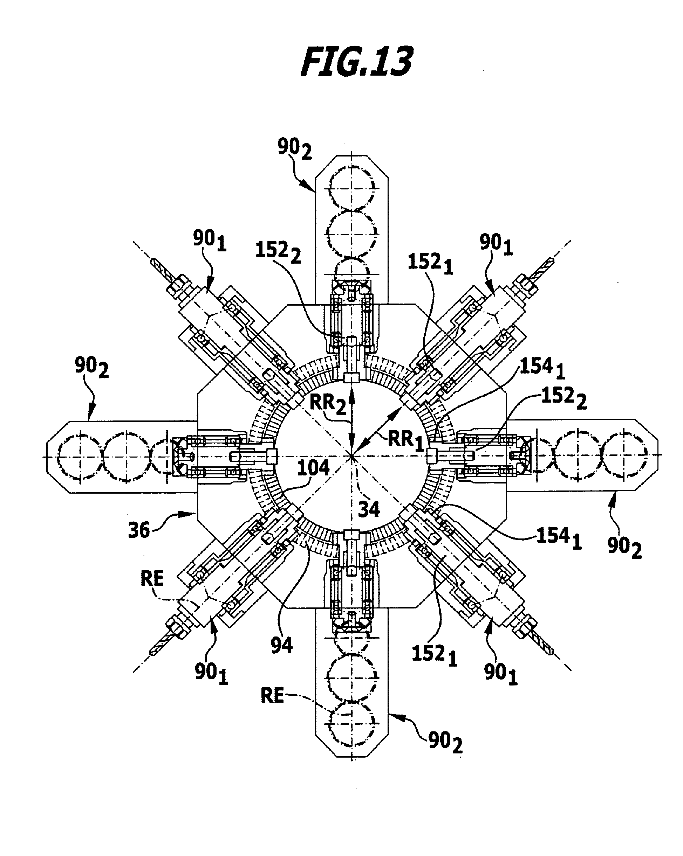

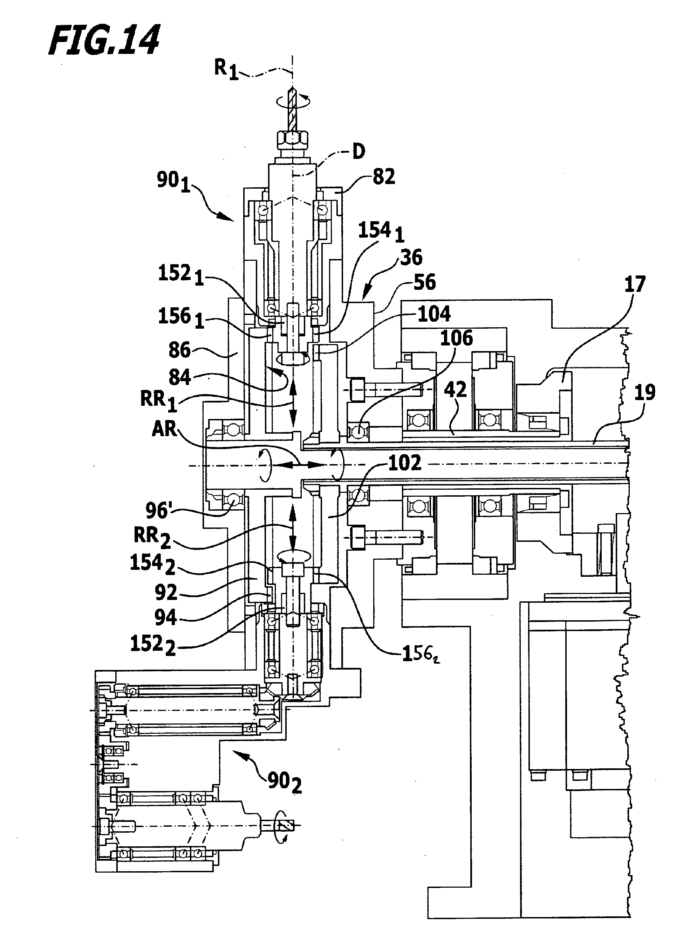

Bei dem zweiten Ausführungsbeispiel sind nun, wie in Fig. 13 im Detail dargestellt, beispielsweise die ersten Werkzeughalter 90₁ und die zweiten Werkzeughalter 90₂ abwechselnd in dem Revolverkopf 36 angeordnet, so dass die ersten Werkzeughalter 90₁ durch die erste Kronenverzahnung 94 und die zweiten Werkzeughalter 90₂ durch die zweite Kronenverzahnung 104 in gleicher Weise wie beim ersten Ausführungsbeispiel treibbar sind, wobei die erste Kronenverzahnung 94 und die zweite Kronenverzahnung 104 in gleichem Abstand zur Radialebene R₁ angeordnet sind, so dass die Antriebszahnräder 154₁ und 154₂ mit demselben Zahnkranz 164 versehen sein können, der allerdings im Fall der ersten Gruppe G₁ von ersten Werkzeughaltern 90₁ in die erste Kronenverzahnung 94 (Fig. 14) eingreift und im Fall der zweiten Gruppe G₂ von zweiten Werkzeughaltern 90₂ in die zweite Kronenverzahnung 104 eingreift (Fig. 14).

Es wäre aber auch denkbar bei dem zweiten Ausführungsbeispiel die ersten Werkzeughalter 90₁ und die zweiten Werkzeughalter 90₂ jeweils in Gruppen zusammengefasst anzuordnen.

Außerdem sind bei diesem Ausführungsbeispiel die Verzahnungseingriffsstellen 156₁ und 156₂ in den radialen Richtungen RR₁ und RR₂ im selben Abstand von der Revolverachse 34 angeordnet, allerdings in axialer Richtung AR an verschiedenen Positionen.

Außerdem liegen, wie in Fig. 13 dargestellt, die radialen Richtungen RR₁ und RR₂ in durch die Revolverachse 34 hindurch verlaufenden Radialebenen RE, die auch durch die Verzahnungseingriffsstellen 156₁ und 156₂ hindurch verlaufen.

Somit ist in gleicher Weise, wie beim ersten Ausführungsbeispiel beschrieben, die erste Gruppe G₁ von ersten Werkzeughaltern 90₁ unabhängig antreibbar von der zweiten Gruppe G₂ von zweiten Werkzeughaltern 90₂.

Bei diesem zweiten Ausführungsbeispiel sind allerdings im Gegensatz zum ersten Ausführungsbeispiel unterschiedlich ausgebildete Antriebszahnräder 154₁ und 154₂ eingesetzt, die mit der jeweiligen Werkzeughalterantriebswelle 152₁ bzw. 152₂ jeweils verbindbar sind.

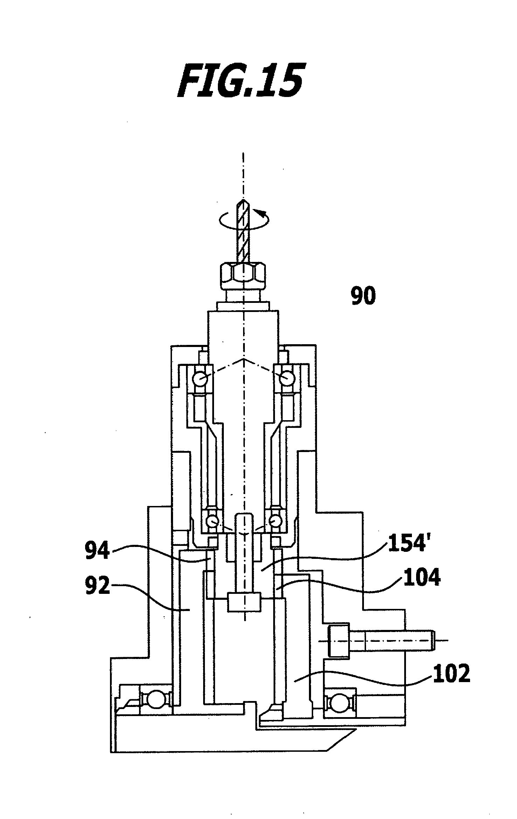

Alternativ zum Antrieb von Gruppen G₁ und G₂ von Werkzeughaltern 90 besteht aber bei der erfindungsgemäßen Lösung auch die Möglichkeit wie beispielsweise in Fig. 15 im Zusammenhang mit dem zweiten Ausführungsbeispiel dargestellt, mit beiden Kronenrädern 92 und 102 gemeinsam ein Antriebszahnrad 154' anzutreiben, das mit beiden Kronenverzahnungen 94 und 104 in Eingriff ist, so dass die Möglichkeit besteht, in diesem Fall den Werkzeughalter 90 mit höherem Antriebsmoment anzutreiben, als beim Antrieb von Werkzeughalter 90 in unterschiedlichen Gruppen G₁ und G₂.

In diesem Fall sind die Kronenradantriebe 110 und 130 so zu betreiben, dass über beide Kronenräder 92 und 102 das Antriebszahnrad 154' mit gleicher Drehzahl angetrieben wird, was bei numerisch gesteuerten Kronenradantrieben 110 und 130 in einfacher Weise über eine geeignete Ansteuerung seitens der Maschinensteuerung realisierbar ist.

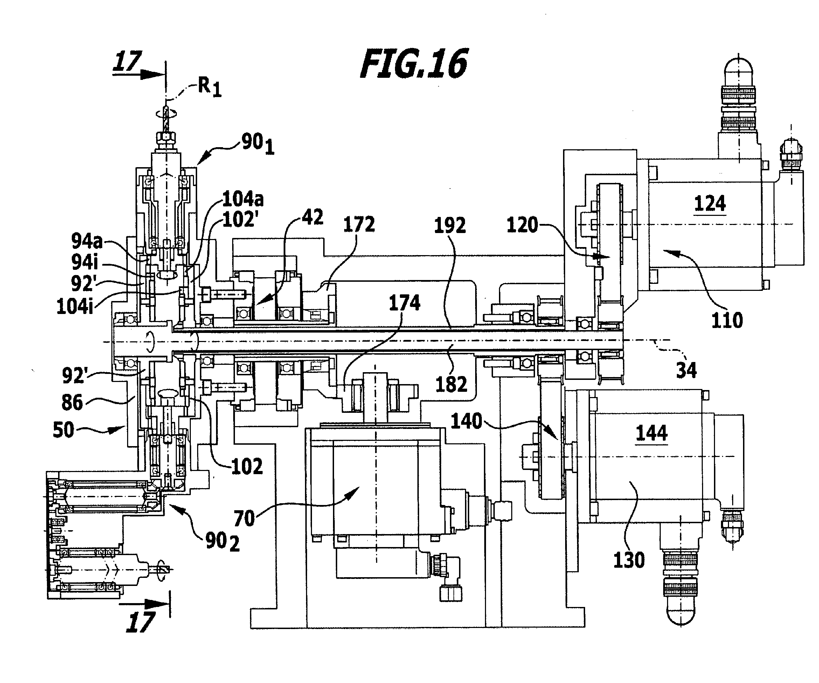

Bei einem dritten Ausführungsbeispiel, dargestellt in Fig. 16 bis 18, sind das erste Kronenrad 92' und das zweite Kronenrad 102' mit jeweils einer äußeren Kronenverzahnung 94a und einer inneren Kronenverzahnung 94i bzw. einer äußeren Kronenverzahnung 104a und einer inneren Kronenverzahnung 104i versehen, wobei die Kronenverzahnungen 94a und 94i des ersten Kronenrads 92' so angeordnet sind, dass bezogen auf die Revolverachse 34 die Kronenverzahnung 104a in einem zwischen diesen liegenden radialen Zwischenraum liegt, während die Kronenverzahnung 104i des zweiten Kronenrads 102' radial innerhalb der inneren Kronenverzahnung 104i liegt.

Außerdem weisen die Kronenverzahnungen 94a und 104a einen identischen Abstand von der Radialebene R₁ auf, der allerdings größer ist, als der Abstand der Kronenverzahnungen 94i und 104i von der Radialebene R₁, wobei der Abstand der jeweiligen inneren Kronenverzahnungen 94i und 104i von der Radialebene ebenfalls identisch ist.

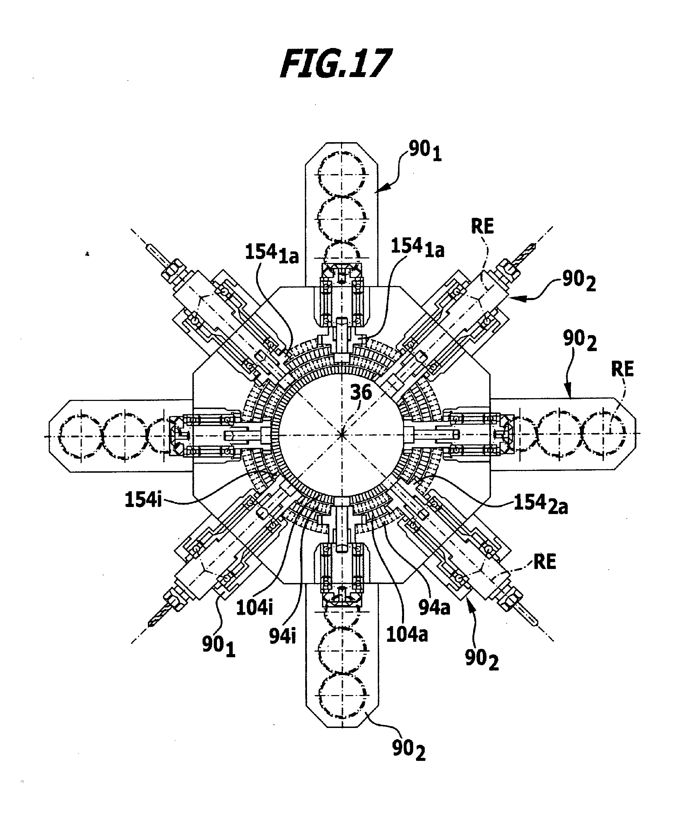

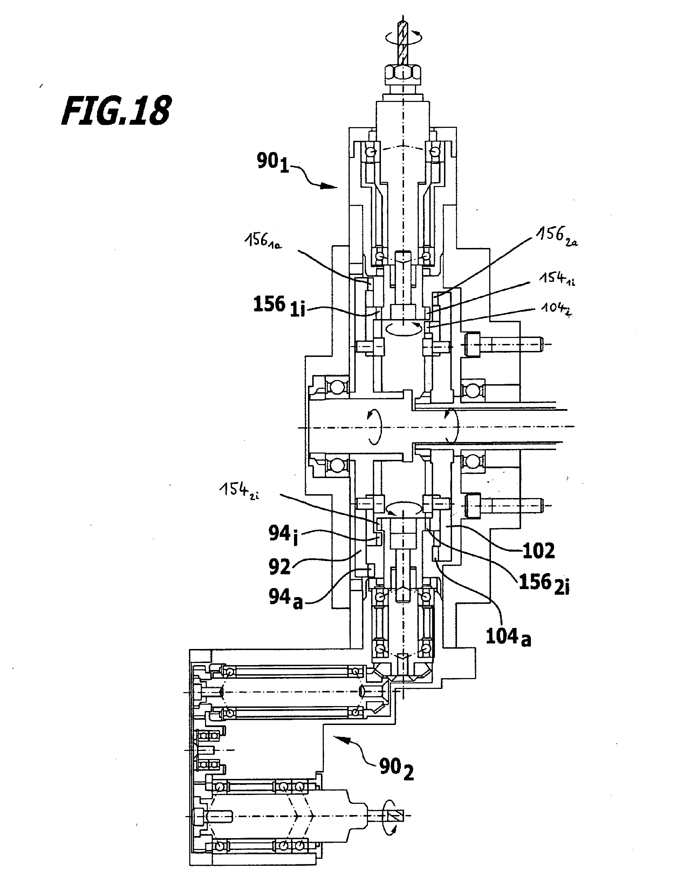

Das heißt, dass wie in Fig. 17 und 18 dargestellt, mit einem Antriebszahnrad 154₁ₐ die Möglichkeit besteht, den jeweiligen Werkzeughalter 90 durch die Verzahnungseingriffsstellen 156₁ₐ mittels der äußeren Kronenverzahnung 94a des ersten Kronenrads 92' oder durch die Verzahnungseingriffsstellen 156₂ₐ mittels der äußeren Kronenverzahnung 104a des zweiten Kronenrads 102' anzutreiben.

Ferner besteht mit einem weniger Zähne aufweisenden und im Durchmesser kleineren Antriebszahnrad 154i die Möglichkeit, den jeweiligen Werkzeughalter 90 entweder durch die Verzahnungseingriffsstelle 156₁ᵢ mit der inneren Kronenverzahnung 94i des ersten Kronenrads 92' oder durch die Verzahnungseingriffsstelle 156₂ᵢ der inneren Kronenverzahnung 104i des zweiten Kronenrads 102' anzutreiben.

Die Verzahnungseingriffsstellen 156₁ₐ und 156₁ᵢ und die Verzahnungseingriffsstellen 156₂ₐ und 156₂ᵢ sind sowohl in den radialen Richtungen RR₁, RR₂ als auch in der axialen Richtung AR relativ zueinander versetzt angeordnet, liegen dabei aber ebenfalls in Radialebenen RE durch die Revolverachse 34 die durch die Revolverachse 34 und die jeweiligen radialen Richtungen RR₁ und RR₂ aufgespannt sind.

Obwohl auch bei dem dritten Ausführungsbeispiel lediglich der erste Kronenradantrieb 110 und der zweite Kronenradantrieb 130 vorhanden sind, können die Werkzeughalter 90 durch jeden der Kronenradantriebe 110 und 130 mit unterschiedlicher Drehzahl angetrieben werden, nämlich dadurch, dass entweder ein Antrieb über die jeweilige äußere Kronenverzahnung 94a bzw. 104a oder die jeweilige innere Kronenverzahnung 94i bzw. 104i erfolgt, wobei weiterhin der Unterschied in der Drehzahl auch dadurch zustande kommt, dass Kronenverzahnungen 94i bzw. 104i aufgrund ihres geringeren Abstandes von der Radialebene R₁ ein kleineres Antriebszahnrad 154i antreiben als die äußeren Kronenverzahnungen 94a und 104a, für welche das Antriebszahnrad 154a aufgrund des größeren Abstandes der Kronenverzahnungen 94a bzw. 104a von der Radialebene R₁ größer ist.

Damit besteht die Möglichkeit, zwei Gruppen G₁ und G₂ von Werkzeughaltern 90 zu bilden, nämlich erste Werkzeughalter 90₁ und zweite Werkzeughalter 90₂, die aufgrund der unterschiedlichen Kronenradantriebe 110 und 130 völlig unterschiedlich antreibbar sind und innerhalb der jeweiligen Gruppen G₁ oder G₂ der Werkzeughalter 90₁ bzw. 90₂ unterschiedliche Übersetzungsverhältnisse beim Antrieb durch den jeweiligen Kronenradantrieb 110 bzw. 130 zu wählen.

## Patentansprüche

1. Verfahren zum Betreiben einer Werkzeugmaschine umfassend ein Maschinengestell (10), einen Werkstückträger (12), in welchem ein Werkstück (40) für eine Bearbeitung fixiert wird, einen Werkzeugträger (30), welcher einen Werkzeugrevolver (30) mit einem Revolverkopf (36) aufweist, der relativ zu einem Revolvergehäuse (32) um eine Revolverachse (34) gedreht und festgelegt wird und der eine Vielzahl von Werkzeugaufnahmen (38) im Revolverkopf (36) umfasst, in welche antreibbare Werkzeughalter (90) mit antreibbaren Werkzeuge (W) eingesetzt und durch eine Werkzeugantriebseinheit (150) des Werkzeugrevolvers (30) angetrieben werden, und eine Vorschubeinheit (24, 28), mit welcher das zu bearbeitende Werkstück (40) und ein in einer Bearbeitungsstellung stehendes Werkzeug (W) des Werkzeugrevolvers (30) bei der Bearbeitung des Werkstücks (40) relativ zueinander bewegt werden,
**daducch gekennzeichnet**, dessin dem Revolverkopf (36) eine erste Gruppe (G₁) von mit einer als Zahnkranz ausgebildeten ersten Verzahnung (94) angetriebenen etsten Werkzeughaltern (90₁) und eine zweite Gruppe von mit einer als Zahnkranz ausgebildeten zweiten Verzahnung (104) angetriebenen zweiten Werkzeughalter (90₂) angeordnet werden, dass die erste Gruppe (G₁) und die zweite Gruppe (G₂) von Werkzeughaltern (90₁, 90₂) unabhängig voneinander angetrieben wird, und dass bei einem Wechsel der Bearbeitung des Werkstücks (40) die erste Gruppe (G₁) und die zweite Gruppe (G₂) so angetrieben werden, dass das eine noch in Bearbeitungseingriff stehende Werkzeug (W₁) seine Drehzahl unverändert beibehält, während das zweite Werkzeug (W₂) auf die erforderliche Drehzahl gebracht wird, so dass bei einem Weiterdrehen des Revolverkopfes (36), um nach dem einen Werkzeug (W₁) das zweite Werkzeug (W₂) in Eingriff zu bringen, das zweite Werkzeug (W₂), wenn es in eine für eine Bearbeitung des Werkstücks (40) geeignete Stellung kommt, bereits die für die Bearbeitung vorgesehene Drehzahl aufweist.

2. Verfahren zum Betreiben einer Werkzeugmaschine nach Anspruch 1, **dadurch gekennzeichnet, dass** ein erster Werkzeughalter (90₁) der ersten Gruppe (G₁) und ein zweiter Werkzeughalter (90₂) der zweiten Gruppe (G₂) in benachbarten Werkzeugaufnahmen (38) des Revolverkopfes (36) angeordnet werden.

3. Verfahren zum Betreiben einer Werkzeugmaschine nach Anspruch 1 oder 2, **dadurch gekennzeichnet, dass** die Werkzeugantriebseinheit (150) eine als Zahnkranz. ausgebildete erste Verzahnung (94) und eine als Zahnkranz ausgebildete zweite Verzahnung (104) aufweist, dass jeder antreibbare Werkzeughalter (90) mit der ersten oder zweiten Verzahnung in Antriebsverbindung gebracht wird, dass jede der ersten und zweiten Verzahnungen (94, 104) durch einen ersten bzw. zweiten Antrieb (110, 130) angetrieben wird und dass der erste und der zweite Antrieb (110, 130) unabhängig voneinander betrieben werden.

4. Verfahren zum Betreiben einer Werkzeugmaschine nach Anspruch 3, **dadurch gekennzeichnet, dass** jeder antreibbare Werkzeugb.alter (90) mittels eines mit der ersten oder zweiten Verzahnung (92, 102) in Eingriff bringbaren Antriebszahnrades (154) angetrieben wird .

5. Verfahren zum Betreiben einer Werkzeugmaschine nach Anspruch 3 oder 4, **dadurch gekennzeichnet, dass** eine erste Verzahnungseingriffsstelle (156₁) für das mit der ersten Verzahnung (92) antreibbare Antriebszahnrad (154₁) und eine zweite Verzahnungseingriffsstelle (156₂) für das mit der zweiten Verzahnung (104) antreibbare Antriebszahnrad (154₂) des in der jeweiligen Werkzeugaufnahme (38) sitzenden Werkzeughalters (90) sich hinsichtlich ihrer Position bezogen auf die Revolverachse (34) in radialer (RR) und/oder axialer Richtung (AR) unterscheiden.

6. Verfahren zum Betreiben einer Werkzeugmaschine nach Anspruch 5, **dadurch gekennzeichnet, dass** die in radialer Richtung (RR) zur Revolverachse (34) radial außenliegende Verzahnungen (94ₐ, 104ₐ) mit Antriebszahnrädern (154₁ₐ, 154₂ₐ) zusammenwirken, die einen größeren Durchmesser aufweisen als Antriebszahnräder (154₁ᵢ, 154₂ᵢ), für weiter innenliegende Verzahnungen (94ᵢ, 104ᵢ).

7. Verfahren zum Betreiben einer Werkzeugmaschine nach einem der Ansprüche 3 bis 6, **dadurch gekennzeichnet, dass** die Werkzeugantriebseinheit (150) mindestens eine weitere Verzahnung (94ᵢ, 104ᵢ) aufweist.

8. Verfahren zum Betreiben einer Werkzeugmaschine nach Anspruch 7, **dadurch gekennzeichnet, dass** mindestens eine weitere Verzahnungseingriffsstelle (156₁ᵢ, 156₂ᵢ), für das mit der mindestens einen weiteren Verzahnung (94ᵢ, 104ᵢ) antreibbare Antriebszahnrad (154₁ᵢ, 154₂ᵢ) und die erste und die zweite Verzahnungseingriffssteite (156₁ₐ, 156₂ₐ) sich hinsichtlich ihrer Position bezogen auf die Revolverachse (34) in radialer (RR) und/oder axialer Richtung (AR) unterscheiden.

9. Verfahren zum Betreiben einer Werkzeugmaschine nach einem der Ansprüche 3 bis 8, **dadurch gekennzeichnet, dass** jeder Werkzeughalter (90) eine Werkzeughalterantriebswelle (152) aufweiset, auf welche das Antriebszahnrad (154) aufgesteckt wird.

10. Verfahren zum Betreiben einer Werkzeugmaschine nach Anspruch 9, **dadurch gekennzeichnet, dass** das Antriebszahnrad (154) einen Zahnkranz (164) aufweist, welcher auf der Werkzeughalterantriebswelte (152) in Richtung einer Längsachse derselben in unterschiedlichen Positionen festgelegt wird.

11. Verfahren zum Betreiben einer Werkzeugmaschine nach Anspruch 10, **dadurch gekennzeichnet, dass** der Zahnkranz (164) durch Festlegung in zwei unterschiedlichen Positionen in Richtung der Längsachse der Werkzeughalterantriebsweile (152) mit mindestens zwei unterschiedlichen Verzahnungen (94, 104) in Eingriffgebracht wird.

12. Verfahren zum Betreiben einer Werkzeugmaschine nach einem der Ansprüche 3 bis 11, **dadurch gekennzeichnet, dass** die erste Verzahnung (94) und die zweite Verzahnung (104) koaxial zueinander im Revolverkopf (36) angeordnet sind.

13. Verfahren zum Betreiben einer Werkzeugmaschine nach einem der Ansprüche 3 bis 12, **dadurch gekennzeichnet, dass** die erste Verzahnung (94) koaxial zur Revolverachse (34) im Revolverkopf (36) angeordnet ist und/oder die zweite Verzahnung (104) koaxial zur Revolverachse (34) im Revolverkopf (36) angeordnet ist.

14. Verfahren zum Betreiben einer Werkzeugmaschine nach Anspruch 12 oder 13, **dadurch gekennzeichnet, dass** die Verzahnungen (94, 104) durch ineinander angeordnete Hohlwellen (112, 132) angetrieben werden.

15. Verfahren zum Betreiben einer Werkzeugmaschine nach einem der Ansprüche 3 bis 14, **dadurch gekennzeichnet, dass** die Antriebe (110, 130) für die Verzahnungen (94, 104) im Revolvergehäuse (32) angeordnet sind.

## Claims

1. Method of operating a machine tool comprising a machine frame (10), a workpiece carrier (12), a workpiece (40) being fixed therein for the purpose of machining, a tool carrier (30) having a tool turret (30) with a turret head (36), said turret head being rotated about a turret axis (34) relative to a turret housing (32) and secured relative thereto and comprising a plurality of tool receptacles (38) in the turret head (36), drivable tool holders (90) with drivable tools (W) being inserted into said tool receptacles and driven by a tool drive unit (150) of the tool turret (30), and an advancing unit (24, 28) for moving the workpiece (40) to be machined and a tool (W) of the tool turret (30) located in a machining position relative to one another during the machining of the workpiece (40),
**characterized in that** a first group (G₁) of tool holders (90₁) driven by first teeth (94) designed as a gear ring and a second group of tool holders (90₂) driven by second teeth (104) designed as a gear ring are arranged in the turret head (36), that the first group (G₁) and the second group (G₂) of tool holders (90₁, 90₂) are driven independently of one another and that during any change in the machining of the workpiece (40) the first group (G₁) and the second group (G₂) are driven such that the first tool (W₁) still engaged in machining retains its rotational speed unchanged while the second tool (W₂) is brought to the required rotational speed so that during further rotation of the turret head (36) to bring the second tool (W₂) into engagement following the first tool (W₁) the second tool (W₂), when it reaches a position suitable for machining the workpiece (40), already has the rotational speed required for the machining.

2. Method of operating a machine tool as defined in claim 1,
**characterized in that** a first tool holder (90₁) of the first group (G₁) and a second tool holder (90₂) of the second group (G₂) are arranged in adjacent tool receptacles (38) of the turret head (36).

3. Method of operating a machine tool as defined in claim 1 or 2,
**characterized in that** the tool drive unit (150) has first teeth (94) designed as a gear ring and second teeth (104) designed as a gear ring, that each drivable tool holder (90) is brought into drive connection with the first or second teeth, that each of the first and second sets of teeth (94, 104) are driven by a first and second drive (110, 130), respectively, and that the first and the second drives (110, 130) are operated independently of one another.

4. Method of operating a machine tool as defined in claim 3,
**characterized in that** each drivable tool holder (90) is driven by a drive gear (154) adapted to be brought into engagement with the first or second teeth (92, 102).

5. Method of operating a machine tool as defined in claim 3 or 4,
**characterized in that** a first tooth engagement point (156₁) for the drive gear (154₁) drivable with the first teeth (92) and a second tooth engagement point (156₂) for the drive gear (154₂) drivable with the second teeth (104), said drive gears relating to the respective tool holders (90) seated in the respective tool receptacles (38), differ from one another with respect to their position in relation to the turret axis (34) in a radial (RR) and/or axial direction (AR).

6. Method of operating a machine tool as defined in claim 5,
**characterized in that** the teeth (94ₐ, 104ₐ) located radially outwards in a radial direction (RR) in relation to the turret axis (34) interact with drive gears (154₁ₐ, 154₂ₐ) having a greater diameter than drive gears (154₁ᵢ, 154₂ᵢ) for teeth (94ᵢ, 104ᵢ) located further inwards.

7. Method of operating a machine tool as defined in any one of claims 3 to 6, **characterized in that** the tool drive unit (150) has at least one additional set of teeth (94ᵢ, 104ᵢ).

8. Method of operating a machine tool as defined in claim 7, **characterized in that** at least one additional tooth engagement point (156₁ᵢ, 156₂ᵢ) for the drive gear (154₁ᵢ, 154₂ᵢ) drivable by the at least one additional set of teeth (94ᵢ, 104ᵢ) and the first and the second tooth engagement points (156₁ₐ, 156₂ₐ) differ from one another with respect to their position in relation to the turret axis (34) in a radial (RR) and/or axial direction (AR).

9. Method of operating a machine tool as defined in any one of claims 3 to 8, **characterized in that** each tool holder (90) has a tool holder drive shaft (152), the drive gear (154) being pushed onto said drive shaft.

10. Method of operating a machine tool as defined in claim 9, **characterized in that** the drive gear (154) has a gear ring (164) secured in different positions on the tool holder drive shaft (152) in the direction of a longitudinal axis thereof.

11. Method of operating a machine tool as defined in claim 10,
**characterized in that** the gear ring (164) is brought into engagement with at least two different sets of teeth (94, 104) by being secured in two different positions in the direction of the longitudinal axis of the tool holder drive shaft (152).

12. Method of operating a machine tool as defined in any one of claims 3 to 11, **characterized in that** the first teeth (94) and the second teeth (104) are arranged coaxially to one another in the turret head (36).

13. Method of operating a machine tool as defined in any one of claims 3 to 12, **characterized in that** the first teeth (94) are arranged coaxially to the turret axis (34) in the turret head (36) and/or the second teeth (104) are arranged coaxially to the turret axis (34) in the turret head (36).

14. Method of operating a machine tool as defined in claim 12 or 13,
**characterized in that** the teeth (94, 104) are driven by hollow shafts (112, 132) arranged in one another.

15. Method of operating a machine tool as defined in any one of claims 3 to 14, **characterized in that** the drives (110, 130) for the teeth (94, 104) are arranged in the turret housing (32).

## Revendications

1. Procédé pour faire fonctionner une machine-outil comprenant un châssis (10), un porte-pièces (12), dans lequel une pièce (40) est immobilisée pour être usinée, un support d'outils (30), lequel présente une tourelle revolver (30) avec une tête revolver (36) qui tourne autour d'un axe revolver (34) par rapport à un carter revolver (32) et s'immobilise et qui comprend une pluralité de logements (38) pour outils dans la tête revolver (36), logements dans lesquels sont logés des porte-outils (90) entraînables avec des outils entrainables (W) et entraînés par une unité d'entraînement d'outils (150) de la tourelle revolver (30), et une unité d'avance (24, 28) avec laquelle la pièce (40) à usiner et un outil (W) en position d'usinage de la tourelle revolver (30) sont déplacés l'un par rapport à l'autre lors de l'usinage de la pièce (40),
**caractérisé en ce que**, dans la tête revolver (36), sont disposés un premier groupe (G₁) de premiers porte-outils (90₁) entraînés par une première denture (94) en forme de couronne dentée et un deuxième groupe de deuxièmes porte-outils (90₂) entraînés par une deuxième denture (104) en forme de couronne dentée, **en ce que** le premier groupe (G₁) et le deuxième groupe (G₂) de porte-outils (90₁, 90₂) sont entraînés indépendamment l'un de l'autre, et **en ce que**, en cas de changement d'usinage de la pièce (40), le premier groupe (G₁) et le deuxième groupe (G₂) sont entraînés de manière qu'un outil (W₁), encore en prise d'usinage, conserve une vitesse de rotation inchangée pendant que le deuxième outil (W₂) est amené à la vitesse de rotation nécessaire de sorte que, lorsque la tête revolver (36) continue à tourner pour amener le deuxième outil (W₂) en prise après un outil (W₁), le deuxième outil (W₂), lorsqu'il arrive dans une position adaptée à un usinage de la pièce (40), présente déjà la vitesse de rotation prévue pour l'usinage.

2. Procédé pour faire fonctionner une machine-outil selon la revendication 1, **caractérisé en ce qu'**un premier porte-outils (90₁) du premier groupe (G₁) et un deuxième porte-outils (90₂) du deuxième groupe (G₂) sont disposés dans des logements pour outils (38) voisins de la tête revolver (36).

3. Procédé pour faire fonctionner une machine-outil selon la revendication 1 ou la revendication 2, **caractérisé en ce que** l'unité d'entraînement des outils (150) présente une première denture (94) en forme de couronne dentée et une deuxième denture (104) en forme de couronne dentée, **en ce que** chaque porte-outils (90) entraînable est mis en liaison d'entraînement avec la première ou la deuxième denture, **en ce que** chacune des première et deuxième dentures (94, 104) est entraînée par un premier ou un deuxième entraînement (110, 130) et **en ce que** le premier et le deuxième entraînement (110, 130) fonctionnent indépendamment l'un de l'autre.

4. Procédé pour faire fonctionner une machine-outil selon la revendication 3, **caractérisé en ce que** chaque porte-outils (90) entraînable est entraîné au moyen d'une roue dentée menante (154) pouvant s'engrener avec la première ou la deuxième denture (92, 102).

5. Procédé pour faire fonctionner une machine-outil selon la revendication 3, **caractérisé en ce qu'**une première zone d'engrènement (156₁) de la roue dentée menante (154₁) entraînable avec la première denture (92) et une deuxième zone d'engrènement (156₂) de la roue dentée menante (154₂) entraînable avec la deuxième denture (104) du porte-outils (90) en place dans le logement pour outils (38) respectif se distinguent du point de vue de leur position par rapport à l'axe revolver (34) dans le sens radial (RR) et/ou axial (AR).

6. Procédé pour faire fonctionner une machine-outil selon la revendication 5, **caractérisé en ce que** les dentures (94ₐ, 104ₐ) situées à l'extérieur radialement dans le sens radial (RR) par rapport à l'axe revolver (34) interagissent avec des roues dentées menantes (154₁ₐ, 154₂ₐ) présentant un plus gros diamètre que les roues dentées menantes (154₁ᵢ, 154₂ᵢ) pour des dentures (94₁, 104₁) situées plus à l'intérieur.

7. Procédé pour faire fonctionner une machine-outil selon l'une quelconque des revendications 3 à 6, **caractérisé en ce que** l'unité d'entraînement des outils (150) présente au moins une autre denture (94ᵢ, 104ᵢ).

8. Procédé pour faire fonctionner une machine-outil selon la revendication 7, **caractérisé en ce qu'**au moins une autre zone d'engrènement de la denture (156₁ᵢ, 156₂ᵢ) pour la roue dentée menante (154₁ᵢ, 154₂ᵢ), entraînable avec au moins une autre denture (94ᵢ, 104ᵢ) et la première et la deuxième zones d'engrènement de la denture (156₁ₐ, 156₂ₐ) se distinguent du point de vue de leur position par rapport à l'axe revolver (34) dans le sens radial (RR) et/ou dans le sens axial (AR).

9. Procédé pour faire fonctionner une machine-outil selon l'une quelconque des revendications 3 à 8, **caractérisé en ce que** chaque porte-outils (90) présente un arbre d'entraînement (152) sur lequel est enfilée la roue dentée menante (154).

10. Procédé pour faire fonctionner une machine-outil selon la revendication 9, **caractérisé en ce que** la roue dentée menante (154) présente une couronne dentée (164) immobilisée sur l'arbre d'entraînement (152) du porte-outils en direction d'un axe longitudinal de celui-ci dans différentes positions.

11. Procédé pour faire fonctionner une machine-outil selon la revendication 10, **caractérisé en ce que** la couronne dentée (164) s'engrène avec au moins deux dentures différentes (94, 104) par immobilisation dans deux positions différentes dans le sens de l'axe longitudinal de l'arbre d'entraînement (152) du porte-outils.

12. Procédé pour faire fonctionner une machine-outil selon l'une quelconque des revendications 3 à 11, **caractérisé en ce que** la première denture (94) et la deuxième denture (104) sont disposées coaxialement l'une par rapport à l'autre dans la tête revolver (36).

13. Procédé pour faire fonctionner une machine-outil selon l'une quelconque des revendications 3 à 12, **caractérisé en ce que** la première denture (94) est disposée coaxialement à l'axe revolver (34) dans la tête revolver (36) et/ou la deuxième denture (104) est disposée coaxialement à l'axe revolver (34) dans la tête revolver (36).

14. Procédé pour faire fonctionner une machine-outil selon la revendication 12 ou la revendication 13, **caractérisé en ce que** les dentures (94,104) sont entraînées par des arbres creux (112, 132) disposés l'un à l'intérieur de l'autre.

15. Procédé pour faire fonctionner une machine-outil selon l'une quelconque des revendications 3 à 14, **caractérisé en ce que** les entraînements (110, 130) des dentures (94, 104) sont disposés dans le carter revolver (32).
